# EUROPÄISCHE PATENTANMELDUNG

(11) **EP 0 677 683 A1**
(43) Veröffentlichungstag der Anmeldung: **18.10.1995**
(21) Anmeldenummer: 95101810.0
(22) Anmeldetag: 10.02.1995
(51) Int. Cl.: F16H 7/06, F16G 13/06, B65G 39/20

(54) **Rollenkette (Gelenkkette)**

(30) Priorität: 08.04.1994 DE 4412166
(71) Anmelder: ERICH WULF UND SOHN GmbH & Co. KG, D-59889 Eslohe-Kückelheim (DE)
(72) Erfinder: Wilke, Hermann Dipl.-Ing., D-59889 Eslohe-Kückelheim (DE)
(74) Vertreter: Fritz, Edmund Lothar, Dipl.-Chem.

(57) **Zusammenfassung**

Bei dieser Rollenkette (Gelenkkette) sollen gleitende Lagerungen wie bei den bekannten Büchsenketten vermieden werden, damit die Kette wartungsfrei wird. Zu diesem Zweck sind die Gelenkverbindungen zwischen den Rollen (11) und den Außenlaschen (14) einerseits mit den Bolzen (16) andererseits jeweils durch aufgepreßte Wälzlager (12, 15) hergestellt. Die Wälzlager (15) für die Außenlaschen sind durch aufgesteckte Ringe (16) gesichert.

## Beschreibung

Die Erfindung bezieht sich auf eine Rollenkette (Gelenkkette) mit den Merkmalen nach dem Oberbegriff des Patentanspruchs.

Bekannt sind Rollenketten, bei denen die Rollen auf Büchsen drehbar gelagert sind und diese wiederum drehbar auf den Bolzen. Durch die jeweilige gleitende Lagerung ist bei solchen bekannten Büchsenketten im Betrieb eine fortgesetzte Wartung durch Schmierung erforderlich.

Der Erfindung liegt die Aufgabe zugrunde, eine Rollenkette der in Rede stehenden Art im wesentlichen wartungsfrei auszubilden.

Diese Aufgabe wird durch die Merkmale nach dem Patentanspruch gelöst.

Bei einer solchen Kette sind an den Gelenkverbindungen zwischen dem Bolzen einerseits und den Außenlaschen beziehungsweise den Rollen andererseits Wälzlager eingesetzt, die im Betrieb nicht geschmiert werden brauchen, so daß die Kette im wesentlichen wartungsfrei ist. Ungeachtet dessen ist eine Rollenkette nach der Erfindung als Förderkette mit hoher Belastung einsetzbar. Da bei

einer Rollenkette nach der Erfindung die Elemente, Innenlaschen und Wälzlager, unmittelbar auf die jeweiligen Bolzen aufgepreßt sind und keine Büchsen benötigt werden, ist in dieser Hinsicht eine Rollenkette nach der Erfindung auch konstruktiv einfacher als die bekannten Büchsenketten.

Im folgenden wird ein Ausführungsbeispiel der Erfindung beschrieben unter Bezugnahme auf die beiliegenden Zeichnungen.

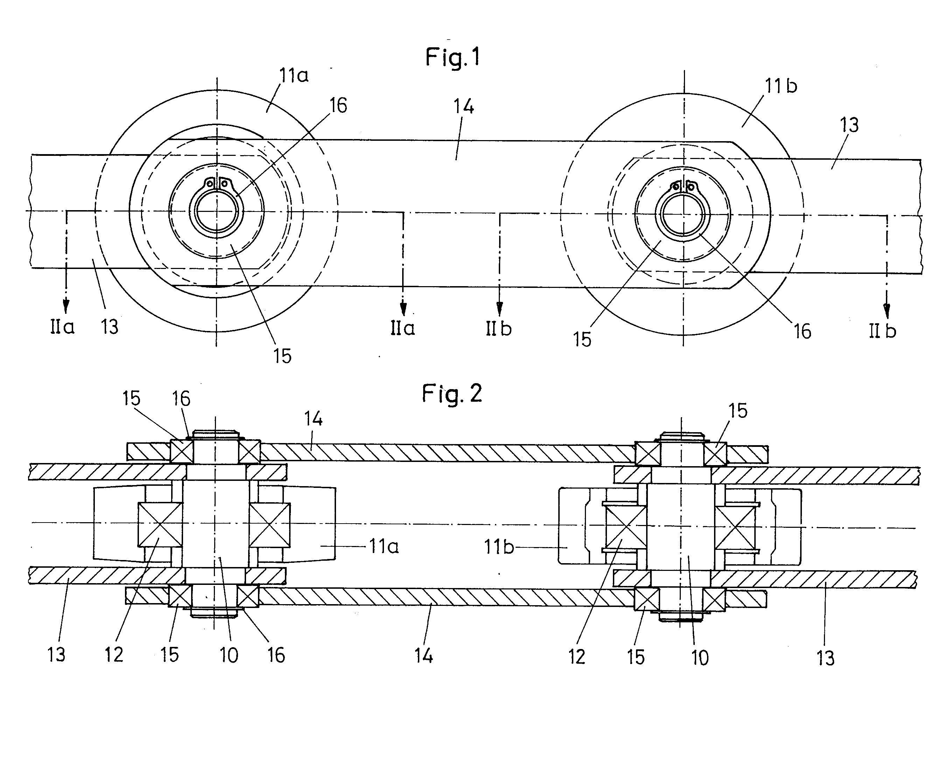

Fig. 1 zeigt eine Ansicht eines Abschnittes einer Rollenkette (Gelenkkette) nach der Erfindung;
Fig. 2 sind Schnitte nach 11-11 von Fig. 1 mit Rollen in zwei Varianten.

Rollen 11 und 11 sind mittels aufgepreßten Wälzlagern 12 auf Bolzen 10 gelagert. Die Bolzen sind in wechselnder Anordnung durch Paare von Außenlaschen 14 und Innenlaschen 13 gelenkig verbunden. Dabei sind die Innenlaschen 13 unmittelbar auf die Bolzen 10 gepreßt, während die Außenlaschen 14 gelenkig durch aufgepreßte Wälzlager 15 mit den Bolzen verbunden sind. Die Wälzlager 15 sind in ihrer axialen Lage durch Sicherungsringe 16 festgelegt.

## Patentansprüche

1. Rollenkette, bei der Bolzen drehbar jeweils eine Rolle aufnehmen und die Bolzen paarweise in wechselnder Anordnung durch Innenlaschen und Außenlaschen gelenkig verbunden sind, dadurch gekennzeichnet, daß die Gelenkverbindung zwischen den Rollen (11) und den Außenlaschen (14) mit dem Bolzen (16) jeweils durch aufgepreßte Wälzlager (12, 15) hergestellt ist und daß dabei die Wälzlager (15) für die Außenlaschen durch aufgesteckte Ringe (16) gesichert sind.
